# EUROPÄISCHE PATENTSCHRIFT

(11) **EP 0 558 446 B1**
(45) Veröffentlichungstag und Bekanntmachung des Hinweises auf die Patenterteilung: **15.05.1996**
(21) Anmeldenummer: 93810091.4
(22) Anmeldetag: 16.02.1993
(51) Int. Cl.: A47F 5/10, A47B 45/00, A47B 47/02, F16B 12/40

(54) **Vorkopfrahmen für Warenpräsentiergestelle**
Side frame members for article display racks
Cadres latéraux pour présentoirs ou marchandises

(30) Priorität: 24.02.1992 CH 550/92
(43) Veröffentlichungstag der Anmeldung: 01.09.1993
(73) Patentinhaber: Fehlbaum & Co., CH-4125 Riehen (CH)
(72) Erfinder: Korth, Bernd, W-7858 Weil am Rhein (DE)
(74) Vertreter: Eschmann, Heinz

(56) Entgegenhaltungen:
- FR-A- 1 572 543
- GB-A- 2 114 873
- GB-A- 2 228 185
- US-A- 2 848 119
- US-A- 4 864 795
- US-A- 4 946 050

## Beschreibung

Die Erfindung betrifft einen Vorkopfrahmen für ein Warenpräsentiergestell gemäss Oberbegriff von Patentanspruch 1, wie es beispielsweise aus der GB-A-2 228 185 bekannt ist.

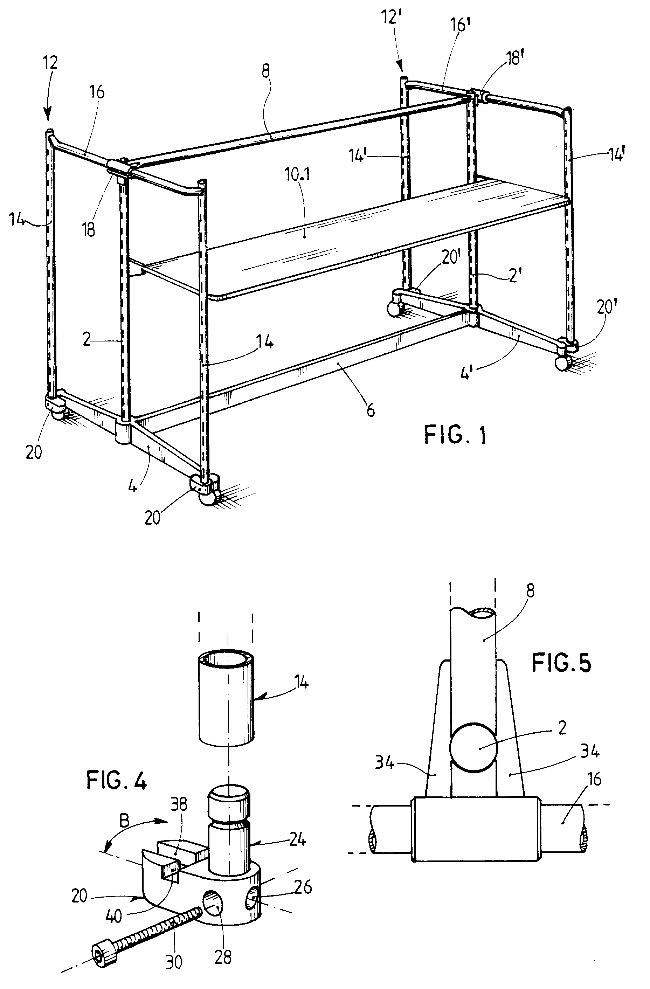

Warenpräsentiergestelle, bei denen Vorkopfrahmen eingesetzt werden, sind in der Regel aus zwei (oder mehr) mit Traversen verbundenen Säulen aufgebaut, an welchen Präsentiereinrichtungen wie etwa Tablare, Konfektionsrahmen und dergleichen befestigt werden. Mit dem Anbringen eines Vorkopfrahmens an einer Kopfseite eines Warenpräsentiergestells wird ermöglicht, dass bei Bedarf auch an diesen Kopfseiten - quer zum übrigen Gestell - Präsentiereinrichtungen befestigt und somit diese sonst ungenutzten Seiten ebenfalls zur Präsentation verwendet werden können (vgl. Fig. 1).

Nun ist es für eine optimale Belegung der Verkaufsfläche erwünscht, dass die Länge der Präsentiereinrichtungen je nach Warengattung abgestimmt gewählt werden kann. So ergibt sich beispielsweise beim Aneinanderreihen von Schuhpaaren auf einem Tablar die optimale Tablarlänge als ein Vielfaches der mittleren Breite eines Schuhpaares. Um solche Abstimmungen zu verwirklichen, werden an Warenpräsentiergestellen neben Präsentiereinrichtungen mit Normallänge, die dem Abstand zweier Säulen des Gestells entspricht, gegebenenfalls auch solche mit Überlänge eingesetzt. Dies hat den Vorteil, dass trotz längerer Präsentiereinrichtungen ein Gestell im jeweils verwendeten Normmass benützt werden kann.

Präsentiereinrichtungen mit Überlänge stehen auf der Kopfseite des Warenpräsentiergestells über dessen Säule vor. Soll also ein Vorkopfrahmen zusammen mit überlangen Präsentiereinrichtungen verwendet werden, so muss dieser so weit beabstandet von der Säule angebracht werden, dass die überlangen Präsentiereinrichtungen Platz finden und auch am Vorkopfrahmen vorbei eingesetzt beziehungsweise weggenommen werden können.

Andererseits ist es bei Verwendung von Präsentiereinrichtungen in Normallänge aus Gründen der Platzausnützung nicht erwünscht, dass die Vorkopfrahmen unnötig weit von der Gestellsäule beabstandet sind, denn insbesondere bei grossen Kaufhäusern addieren sich auch nur wenige nicht ausgenützte Zentimeter pro Gestell über die gesamte Verkaufsfläche gerechnet zu ganz beachtlichen Meterzahlen.

Aufgabe der vorliegenden Erfindung ist es daher, einen Vorkopfrahmen für Warenpräsentiergestelle zu schaffen, der so gestaltet ist, dass er in einer einzigen Ausführung und ohne Zusatz von Auswechselteilen sowohl nahe an einer Säule des Gestells als auch beabstandet davon angebracht werden kann. Dabei soll seine Handhabung beim An- und Umbauen einfach, leicht verständlich und sicher erfolgen können.

Der erfindungsgemässe Vorkopfrahmen ist im unabhängigen Patentanspruch 1 definiert; bevorzugte Ausführungsformen ergeben sich aus den abhängigen Patentansprüchen.

Die Erfindung ermöglicht es, mit einer einzigen Ausführung eines Vorkopfrahmens in optimaler Ausnutzung der vorhandenen Verkaufsfläche sowohl Präsentiereinrichtungen mit Normallänge, als auch solche mit Überlänge zu verwenden. Dies bedeutet für den Anwender grosse Flexibilität beim Einsatz der Vorkopfrahmen. Insbesondere muss nicht schon vor der Anschaffung bekannt sein, wieviele der beiden Verwendungsarten des Vorkopfrahmens benötigt sind, und entsprechend werden die Anschaffungskosten und die Lagerhaltung verkleinert. Zudem werden auf Herstellerseite die Kosten gesenkt, da anstelle von zwei verschiedenen Ausführungen von Vorkopfrahmen nur eine produziert werden muss.

Weiter kann dank der vorgeschlagenen unteren Verbindung der Längsschenkel des Vorkopfrahmens mit einem Fussausleger des Warenpräsentiergestells der sonst üblicherweise benötigte untere Rahmen-Querschenkel entfallen. Dies bedeutet einerseits eine Materialersparnis bei der Herstellung und erlaubt es andererseits, für den Vorkopfrahmen die gesamte Höhe des Gestells bis hinunter zum Fussausleger auszunützen.

Im folgenden wird anhand der beiliegenden Zeichnungen ein Ausführungsbeispiel der Erfindung beschrieben. In den Zeichnungen zeigt
- Fig. 1: in Gesamtansicht ein Warenpräsentiergestell mit je einem erfindungsgemässen Vorkopfrahmen an jeder Kopfseite,
- Fig. 2a: einen Ausschnitt der vorderen Kopfseite des Warenpräsentiergestells von Figur 1, mit dem Vorkopfrahmen in der Stellung für Präsentiereinrichtungen in Normallänge,
- Fig. 2b: den Ausschnitt von Figur 2a in Draufsicht,
- Fig. 3a: einen der Figur 2a entsprechenden Ausschnitt, jedoch mit dem Vorkopfrahmen in der Stellung für Präsentiereinrichtungen in Überlänge,
- Fig. 3b: den Ausschnitt von Figur 3a in Draufsicht,
- Fig. 4: ein unteres Verbindungsorgan im Detail, und
- Fig. 5: das obere Verbindungsorgan in Draufsicht.

Das in Figur 1 dargestellte Warenpräsentiergestell - im weiteren kurz Gestell genannt - besteht aus zwei Säulen 2, 2', die in Fussauslegern 4, 4' gehalten sind, einer Querverbindung 6 zwischen den beiden Fussauslegern und einer Traverse 8. Stellvertretend für eine Vielzahl möglicher Präsentiereinrichtungen, die am Gestell angebracht werden können, ist ein Tablar 10.1 eingezeichnet.

An den beiden Kopfseiten des Gestells sind erfindungsgemässe Vorkopfrahmen, gesamthaft mit 12 beziehungsweise 12' bezeichnet, angebracht. Jeder Vorkopfrahmen setzt sich zusammen aus zwei Längsschenkeln 14 (bzw. 14') und einem Querschenkel 16 (bzw. 16') und ist mit einem oberen Verbindungsorgan 18 (bzw. 18') und zwei unteren Verbindungsorganen 20 (bzw. 20') mit dem Gestell verbunden. An den Vorkopfrahmen können ebenfalls Präsentiereinrichtungen angebracht werden. Auf eine entsprechende Darstellung wurde zugunsten der Übersichtlichkeit verzichtet.

Für die Teile des Gestells und des Vorkopfrahmens kommen grundsätzlich alle Formen von Stangen, Rohren, Profilen usw. in diversen Materialien in Frage. Im gezeigten Ausführungsbeispiel sind die Säulen 2, 2' und die Längsschenkel 14, 14' Metallrohre, die in bekannter Weise mit Einhängeschlitzen versehen sind.

Damit die Gebrauchsstellung des Vorkopfrahmens, wie weiter unten näher beschrieben, einfach gewechselt werden kann, sind die Verbindungsorgane wiederlösbar am Gestell befestigt, beispielsweise das obere in Schlitzen an der Säule eingehängt, die unteren mit einer Inbusschraube am Fussausleger angeschraubt.

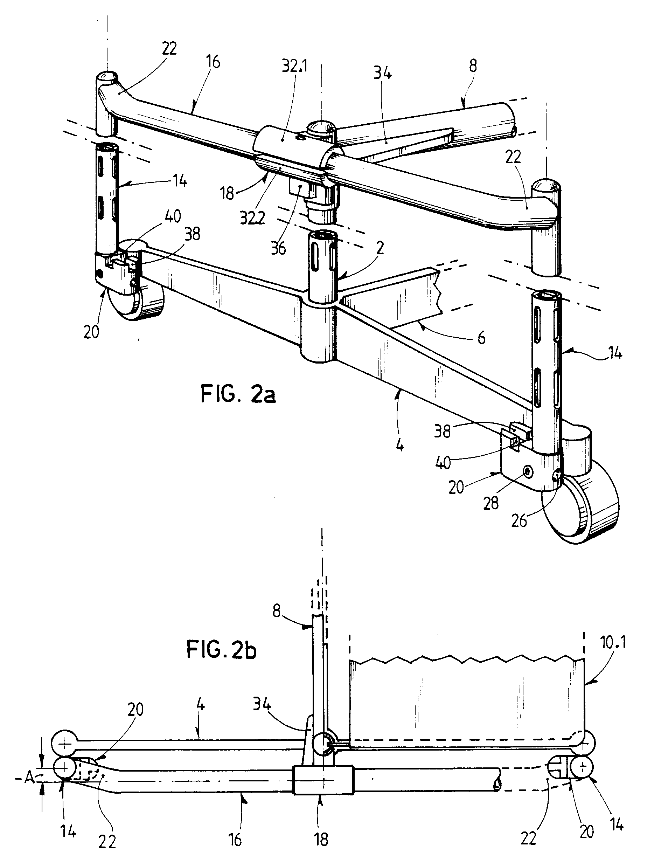

Die in Figur 1 gezeigte Stellung des Vorkopfrahmens wird für Präsentiereinrichtungen in Normallänge verwendet. Diese Stellung, im weiteren Stellung "Normal" genannt, ist in den Figuren 2a und 2b genauer zu erkennen. Gleiche Bezugszeichen in den weiteren Figuren beziehen sich jeweils auf dasselbe Teil.

Wie in den Figuren 2a und 2b zu sehen, ist der Querschenkel 16 in seinen Endbereichen 22 abgekröpft, sodass die Längsschenkel 14 gegenüber der Längsachse des Querschenkels 16 um die Strecke A versetzt angeordnet sind. In der Stellung "Normal" ist die Versetzung gegen das Gestell hin gerichtet (mit -A angedeutet), wodurch die Längsschenkel 14, wie erwünscht, nahe beim Ende von Präsentiereinrichtungen in Normallänge, beispielsweise vom in Figur 2b gezeigten Tablar 10.1, zu liegen kommen. Präsentiereinrichtungen in Überlänge hingegen, die auf der Kopfseite des Gestells vorstehen, finden so keinen Platz.

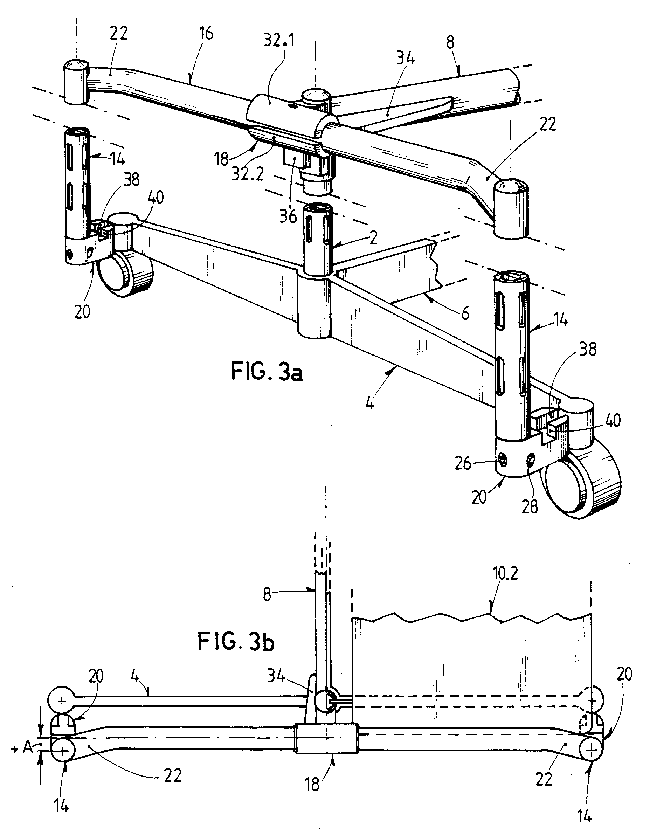

Die versetzte Anordnung der Längsschenkel ermöglicht es nun, mit einer einfachen Drehung des Vorkopfrahmens um 180° in eine zweite Stellung den für Präsentiereinrichtungen in Überlänge benötigten Raum freizugeben. Diese zweite Stellung des Vorkopfrahmens, im weiteren Stellung "Breit" genannt, ist in den Figuren 3a und 3b dargestellt. Nach der Drehung verläuft die Kröpfung der Endbereiche 22 entgegengesetzt und die Versetzung ist vom Gestell weg gerichtet (mit +A angedeutet), wodurch gegenüber der Stellung "Normal" ein Versprung der Lage der Längsschenkel 16 um die Strecke zweimal A erreicht wird, sodass auch überlange Präsentiereinrichtungen, wie beispielsweise das gezeigte Tablar 10.2, eingesetzt werden können.

Es versteht sich, dass der für eine bestimmte Überlänge benötigte Versprung durch eine entsprechend abgestimmte Versetzung A gewählt werden kann. Für ein Tablar mit 6 Zentimeter Überlänge beispielsweise ergibt sich auf beiden Kopfseiten ein benötigter Versprung von 3 Zentimetern und damit eine Versetzung A von 1,5 Zentimetern.

Zur Verbindung der Längsschenkel 16 mit dem Fussausleger 4 im jeweils der Stellung "Normal" oder "Breit" angepassten Abstand sind die unteren Verbindungsorgane 20 geeignet ausgebildet. In Figur 4 ist ein Ausführungsbeispiel im Detail zu sehen. Das Verbindungsorgan ist ein blockförmiges Element 20 mit einer ovalen Grundfläche, welches mittels eines Zapfens 24 verschwenkbar (Pfeil B) im unteren Endbereich des Längsschenkels 14 gelagert ist. Für die Stellung "Normal", die einen kleineren Abstand der Längsschenkel 16 vom Fussausleger 4 bedingt, wird das Element 20 in eine Verbindungsposition verschwenkt, in der es mit einer seiner längeren Seiten am Fussausleger anliegt (siehe Figuren 2a und 2b), und für die Stellung "Breit" wird es so gestellt, dass es mit der kürzeren, vom Längsschenkel 14 entfernten Seite am Fussausleger anliegt (siehe Figuren 3a und 3b), was den in dieser Stellung benötigten grösseren Abstand ergibt. Entsprechend jeder der beiden Verbindungspositionen ist das Element 20 mit zwei Bohrungen 26 und 28 versehen, durch welche jeweils eine Inbusschraube 30 geführt werden kann, mit der das Element 20 mit dem Fussausleger 4 verschraubt wird.

Gemäss der hier beschriebenen bevorzugten Ausführungsform ist der Querschenkel 16 zwischen zwei Rohrteilen 32.1, 32.2 festgeklemmt im oberen Verbindungsorgan 18 gehalten (vgl. Figur 2a). Die Rohrteile 32.1, 32.2 sind wiederlösbar miteinander verbunden, beispielsweise auf der einen Seite verhakt und auf der anderen verschraubt, sodass der Querschenkel 16 zum Wechseln der Stellung des Vorrahmens leicht vom oberen Verbindungsorgan gelöst werden kann.

Weiter kann das obere Verbindungsorgan 18 mit zwei Auslegern 34 versehen sein, die insbesondere bei einem in Einhängeschlitzen an der Säule 2 befestigten Verbindungsorgan dazu dienen, den Vorkopfrahmen zusätzlich gegen seitliches Verschwenken an der Traverse 8 abzustützen.

Ein Wechseln der Stellung des Vorkopfrahmens von "Normal" auf "Breit" oder umgekehrt ist vorteilhaft ohne Auswechselteile und mit nur wenigen, einfachen Arbeitsschritten möglich. Zuerst werden die beiden Inbusschrauben 30 herausgenommen und somit die unteren Verbindungsorgane 20 vom Fussausleger 4 gelöst. Anschliessend wird das längsgeteilte Rohrstück 32.1, 32.2 am oberen Verbindungsorgan 18 geöffnet, der jetzt freiliegende Vorkopfrahmen um 180° gedreht und in der neuen Stellung wieder im Rohrstück festgeklemmt. Abschliessend werden die unteren Verbindungsorgane 20 in die neue Verbindungsposition verschwenkt und mit den Inbusschrauben 30 am Fussausleger 4 befestigt.

Ein Vorkopfrahmen wird gerne zur dekorativen Präsentation der im Gestell vorhandenen Waren benutzt und aus gestalterischen Gründen ist es deshalb erwünscht, hinter dem Vorkopfrahmen eine Rückwand anbringen zu können. Zu diesem Zweck können die oberen und unteren Verbindungsorgane des Vorkopfrahmens Halteelemente für eine Rückwand aufweisen. Im gezeigten Ausführungsbeispiel sind dies eine nach unten gerichtete Platte 36 am oberen Verbindungsorgan 18 und nach oben gerichtete Nuten 38 bzw. 40 in den unteren Verbindungsorganen 20 (siehe Figuren 2a, 3a und 4). Soll eine Rückwand eingesetzt werden, so kann diese von unten zwischen die Platte 36 und die Säule 2 des Gestells eingeschoben und anschliessend in die Nuten 38 bzw. 40 abgesenkt werden. Die Nuten 38 bzw. 40 sind so angeordnet, dass jede einer Verbindungsposition des unteren Verbindungsorgans 20 angepasst ist.

Das beschriebene Ausführungsbeispiel kann vom Fachmann im Rahmen des im unabhängigen Patentanspruch definierten Erfindungsgedankens in mehrfacher Hinsicht abgewandelt werden.

So wäre es etwa möglich - wenn auch mit einer gewissen Einbusse an Stabilität des Vorrahmens verbunden - die horizontale Versetzung der Längsschenkel gegenüber dem Querschenkel durch gekreuzt überlappend montierte Schenkelenden, gegebenenfalls mit dazwischen eingesetztem Abstandsstück, zu realisieren.

Auch die zwei unterschiedlichen Verbindungspositionen der unteren Verbindungsorgane lassen sich nebst der beschriebenen verschwenkbaren Ausführung in anderer Weise erreichen. In Frage käme beispielsweise ein unteres Verbindungsorgan, das in zwei unterschiedlichen Verbindungspositionen am Längsschenkel steckbar ist, oder gegebenenfalls sogar ein fest angebrachtes, welches eine Grundform aufweist, die auf den beiden möglichen Verbindungsseiten die notwendigen unterschiedliche Abstände ergibt.

Weiter könnte das obere Verbindungsorgan mit irgendeiner anderen, dem Fachmann bekannten Halterung für den Querschenkel versehen sein. Anstelle einer lösbaren Halterung wäre es grundsätzlich auch denkbar, das obere Verbindungsorgan beidseitig so auszubilden, dass es sich unverändert in beiden Stellungen des Vorkopfrahmens mit der Säule des Gestells verbinden lässt.

## Patentansprüche

1. Vorkopfrahmen (12) für ein Warenpräsentiergestell (2,2',4,4',6,8), umfassend zwei Längsschenkel (14), welche in ihrem oberen Endbereich durch einen Querschenkel (16) verbunden sind, sowie ein oberes Verbindungsorgan (18) zur wiederlösbaren Verbindung des Querschenkels (16) mit einer Säule (2) des Warenpräsentiergestells, die mit einem Fußausleger (4) verbunden ist, dadurch *gekennzeichnet*, dass
die Längsschenkel (14) gegenüber der Längsachse des Querschenkels (16) in horizontaler Richtung versetzt (A) angeordnet sind,
derart, dass der Vorkopfrahmen mit dem Warenpräsentiergestell in zwei sich durch eine 180°-Drehung des Vorkopfrahmens um die Vertikale unterscheidenden Stellungen verbindbar ist, wobei die Längsschenkel (14) in der ersten Stellung gegen das Warenpräsentiergestell hin und in der zweiten von diesem weg versetzt sind,
dass weiter die Längsschenkel (14) in ihrem unteren Endbereich je mit einem unteren Verbindungsorgan (20) zur wiederlösbaren Verbindung mit dem Fussausleger (4) des Warenpräsentiergestells versehen sind,
und jedes untere Verbindungsorgan (20) zwei unterschiedliche Verbindungspositionen aufweist, von denen jede einen horizontalen Abstand der Längsschenkel (14) zum Fussausleger (4) ergibt, der jeweils einer der beiden möglichen Stellungen des Vorkopfrahmens angepasst ist.

2. Vorkopfrahmen nach Patentanspruch 1, dadurch *gekennzeichnet*, dass zur Erzielung der horizontalen Versetzung (A) der Längsschenkel (14) gegenüber dem Querschenkel (16) die beiden Endbereiche (22) des Querschenkels abgewinkelt oder gekröpft oder gekrümmt sind.

3. Vorkopfrahmen nach einem der Patentansprüche 1 oder 2, dadurch *gekennzeichnet*, dass die beiden unteren Verbindungsorgane (20) quer zur Längsrichtung des Längsschenkels (14) verschwenkbar im oder am Längsschenkel (14) gelagert sind.

4. Vorkopfrahmen nach Patentanspruch 3, dadurch *gekennzeichnet*, dass die unteren Verbindungsorgane (20) als blockförmiges Element mit im wesentlichen rechteckiger oder ovaler Grundfläche ausgebildet sind, derart, dass sich das blockförmige Element in eine erste Verbindungsposition (Fig. 2a,2b) mit seinen längeren Seiten im wesentlichen parallel zum Fussausleger (4) oder in eine zweite Verbindungsposition (Fig. 3a,3b) mit seinen kürzeren Seiten im wesentlichen parallel zum Fussausleger (4) verschwenken lässt, wobei die erste Verbindungsposition einen Abstand der Längsschenkel (14) zum Fussausleger (4) ergibt, der der Stellung des Vorkopfrahmens mit gegen das Warenpräsentiergestell hin versetzten Längsschenkeln angepasst ist, und die zweite Verbindungsposition einen Abstand, der der Stellung des Vorkopfrahmens mit vom Warenpräsentiergestell weg versetzten Längsschenkeln angepasst ist.

5. Vorkopfrahmen nach einem der Patentansprüche 1 bis 4, dadurch *gekennzeichnet*, dass die unteren Verbindungsorgane (20) je einer der beiden Verbindungspositionen zugeordnete Bohrungen (26,28) zur Aufnahme eines wiederlösbaren Befestigungselements (30), mit dem das Verbindungsorgan (20) am Fussausleger (4) des Warenpräsentiergestells befestigbar ist, aufweisen.

6. Vorkopfrahmen nach einem der Patentansprüche 1 bis 5, dadurch *gekennzeichnet*, dass das obere Verbindungsorgan (18) ein längsgeteiltes Rohrstück (32.1,32.2) umfasst, in welchem der Querschenkel (16) festgeklemmt gehalten ist, wobei die beiden Rohrteile (32.1,32.2) wiederlösbar miteinander verbunden sind, sodass nach Lösen des einen Rohrteils der Querschenkel (16) in das Rohrstück (32.1,32.2) einsetzbar beziehungsweise aus diesem herausnehmbar ist.

7. Vorkopfrahmen nach einem der Patentansprüche 1 bis 6, dadurch *gekennzeichnet*, dass das obere Verbindungsorgan (18) zwei Ausleger (34) aufweist, die in am Warenpräsentiergestell montiertem Zustand seitlich an einer Traverse (8) des Warenpräsentiergestells anliegen und den Vorkopfrahmen gegen Verschwenken an dieser Traverse abstützen.

8. Vorkopfrahmen nach einem der Patentansprüche 1 bis 7, dadurch *gekennzeichnet*, dass das obere Verbindungsorgan (18) und/oder die unteren Verbindungsorgane (20) Halteelemente (36,38,40) für eine zwischen Vorkopfrahmen und Säule des Warenpräsentiergestells einsetzbare Rückwand aufweisen.

9. Vorkopfrahmen nach Patentanspruch 8, dadurch *gekennzeichnet*, dass die Halteelemente eine am oberen Verbindungsorgan (18) angeformte, nach unten gerichtete Platte oder Rippe (36) zum Sichern der Rückwand in ihrem oberen Kantenbereich umfassen.

10. Vorkopfrahmen nach Patentanspruch 8, dadurch *gekennzeichnet*, dass die Halteelemente in den unteren Verbindungsorganen (20) ausgebildete, nach oben gerichtete Nuten (38,40) zum Aufnehmen und Sichern der Rückwand in ihrem unteren Kantenbereich umfassen.

11. Warenpräsentiergestell mit einem Vorkopfrahmen nach einem der Patentansprüche 1 bis 10.

## Claims

1. Auxiliary head frame (12) for a goods display rack (2, 2', 4, 4', 6, 8), comprising two longitudinal members (14) which in their top end region are connected by a cross-member (16), and also a top connection element (18) for the disconnectable connection of the cross-member (16) to a pillar (2) of the goods display rack, said pillar being connected to a foot cantilever (4), characterized in that the longitudinal members (14) are arranged offset (A) in the horizontal direction, relative to the longitudinal axis of the cross-member (16), such that the auxiliary head frame can be connected to the goods display rack in two positions differing from one another by a 180 degree rotation of the auxiliary head frame about the vertical, the longitudinal members (14) being offset towards the goods display rack in the first position and away from said rack in the second position, in that in addition the longitudinal members (14) are each provided in their bottom end region with a bottom connection element (20) for disconnectable connection to the foot cantilever (4) of the goods display rack, and each bottom connection element (20) has two different connection positions, each providing a horizontal distance, adapted in each case to one of the two possible positions of the auxiliary head frame, between the longitudinal members (14) and the foot cantilever (4).

2. Auxiliary head frame according to Patent Claim 1, characterized in that to achieve the horizontal offset (A) of the longitudinal members (14) relative to the cross-member (16) the two end regions (22) of the transverse member are bent over or cranked or curved.

3. Auxiliary head frame according to one of Patent Claims 1 or 2, characterized in that the two bottom connection elements (20) are mounted in or on the longitudinal member (14) for pivoting transversely to the longitudinal direction of the longitudinal member (14).

4. Auxiliary head frame according to Patent Claim 3, characterized in that the bottom connection elements (20) are in the form of a block-like element having a substantially rectangular or oval base surface, in such a manner that the block-like element can be pivoted into a first connection position (Figures 2a, 2b) with its longer sides substantially parallel to the foot cantilever (4) or into a second connection position (Figures 3a, 3b) with its shorter sides substantially parallel to the foot cantilever (4), the first connection position giving between the longitudinal members (14) and the foot cantilever (4) a distance which is adapted to the position of the auxiliary head frame in which the longitudinal members are offset towards the goods display rack, and the second connection position giving a distance which is adapted to the position of the auxiliary head frame in which the longitudinal members are offset away from the goods display rack.

5. Auxiliary head frame according to one of Patent Claims 1 to 4, characterized in that the bottom connection elements (20) have holes (26, 28), each associated with one of the two connection positions, for the reception of a disconnectable fastening element (30) by which the connection element (20) can be fastened to the foot cantiliver (4) of the goods display rack.

6. Auxiliary head frame according to one of Patent Claims 1 to 5, characterized in that the top connection element (18) comprises a longitudinally divided tube piece (32.1, 32.2) in which the cross-member (16) is held clamped fast, the two tube parts (32.1, 32.2) being disconnectably joined to one another, so that after detachment of the one tube part the cross-member (16) can be inserted into or extracted from the tube piece (32.1, 32.2).

7. Auxiliary head frame according to one of Patent Claims 1 to 6, characterized in that the top connection element (18) has two cantilever arms (34) which, in the mounted position on the goods display rack, lie laterally against a transverse member (8) of the goods display rack and support the auxiliary head frame against pivoting on said transverse member.

8. Auxiliary head frame according to one of Patent Claims 1 to 7, characterized in that the top connection element (18) and/or the bottom connection elements (20) has or have holding elements (36, 38, 40) for a rear wall which can be inserted between the auxiliary head frame and the pillar of the goods display rack.

9. Auxiliary head frame according to Patent Claim 8, characterized in that the holding elements comprise a downwardly directed plate or rib (36) formed on the top connection element (18) for securing the rear wall in its top edge region.

10. Auxiliary head frame according to Patent Claim 8, characterized in that the holding elements comprise upwardly directed slots (38, 40) formed in the bottom connection elements (20) for the reception and securing of the rear wall in its bottom edge region.

11. Goods display rack having an auxiliary head frame according to one of Patent Claims 1 to 10.

## Revendications

1. Cadre latéral (12) pour une étagère à présentation de marchandises (2, 2', 4, 4', 6, 8), comprenant deux poutres longitudinales (14) qui sont connectées à leur extrémité supérieure par une poutre transversale (16), ainsi qu'un organe de connexion supérieur (18) pour la connexion amovible de la poutre transversale (16) à une colonne (2) de l'étagère à présentation de marchandises, qui est reliée à un bras de support (4), caractérisé en ce que les poutres longitudinales (14) sont disposées décalées en direction horizontale (A) par rapport à l'axe longitudinal de la poutre transversale (16), de telle manière que le cadre latéral peut être connecté avec l'étagère à présentation de marchandises dans deux positions distantes d'une rotation de 180° du cadre latéral autour d'un axe vertical, les poutres longitudinales (14) étant décalées dans la première position en direction de l'étagère à présentation de marchandises et dans la deuxième position en direction opposée, en ce qu'en outre les poutres longitudinales (14) étant munies chacune dans leur extrémité inférieure d'un organe de connexion inférieur (20) pour la liaison amovible avec le bras de support (4) de l'étagère à présentation de marchandises, et chaque organe de connexion inférieur (20) comprend deux positions de liaison différentes dont chacune aboutit à une distance horizontale des poutres longitudinales (14) au bras de support (4) qui est respectivement adaptée à une des deux positions possibles du cadre latéral.

2. Cadre latéral selon la revendication 1, caractérisé en ce que, pour obtenir le décalage horizontal (A) des poutres longitudinales (14) par rapport à la poutre transversale (16), les deux parties terminales (22) de la poutre transversale sont pliées en U ou coudées ou courbées.

3. Cadre latéral selon une des revendications 1 ou 2, caractérisé en ce que les deux organes de connexion inférieurs (20) sont montés dans ou sur la poutre longitudinale (14) de manière qu'ils puissent être pivotés transversalement par rapport à la direction longitudinale de la poutre longitudinale (14).

4. Cadre latéral selon la revendication 3, caractérisé en ce que les organes de connexion inférieurs (20) sont construits comme éléments en forme de blocs avec une base essentiellement rectangulaire ou ovale, de telle manière que l'élément en forme de bloc puisse être pivoté en une première position de liaison (figures 2a, 2b) avec ses côtés plus longs sensiblement parallèles au bras de support (4) ou en une seconde position de liaison (figures 3a, 3b) avec ses côtés plus courts sensiblement parallèles au bras de support (4), la première position de liaison aboutissant à une distance des poutres longitudinales (14) au bras de support (4) qui est adaptée à la position du cadre latéral avec les poutres longitudinales décalées en direction de l'étagère à présentation de marchandises, et la deuxième position de liaison aboutissant à une distance qui est adaptée à la position du cadre latéral avec les poutres longitudinales décalées par rapport à l'étagère à présentation de marchandises.

5. Cadre latéral selon l'une des revendications 1 à 4, caractérisé en ce que les organes de connexion inférieurs (20) possèdent des alésages (26, 28) qui appartiennent chacun à une des deux positions de liaison, pour le logement d'un élément de fixation amovible (30), avec lequel l'organe de connexion (20) peut être fixé au bras de support (4) de l'étagère à présentation de marchandises.

6. Cadre latéral selon l'une des revendications 1 à 5, caractérisé en ce que l'organe de connexion supérieur (18) comprend une pièce tubulaire séparée en direction longitudinale (32.1, 32.2) dans laquelle la poutre transversale (16) est tenue serrée, les deux pièces tubulaires (32.1, 32.2) étant connectées amovibles l'une avec l'autre de manière que, après le démontage d'une pièce tubulaire, la poutre transversale (16) puisse être introduite dans la pièce tubulaire (32.1, 32.2) et détachée de cette dernière.

7. Cadre tubulaire selon l'une des revendications 1 à 6, caractérisé en ce que l'organe de connexion supérieur (18) comprend deux bras (34), qui lorsqu'ils sont montés sur l'étagère à présentation de marchandises sont latéralement en contact avec une traverse (8) de l'étagère à présentation de marchandises et qui supportent du côté de la traverse le cadre latéral pour qu'il ne bascule pas.

8. Cadre latéral selon l'une des revendications 1 à 7, caractérisé en ce que l'organe de connexion supérieur (18) et/ou les organes de connexion inférieurs (20) possèdent des éléments de fixation (36, 38, 40) pour une paroi arrière, qui peut être insérée entre le cadre latéral et la colonne de l'étagère à présentation de marchandises.

9. Cadre latéral selon la revendication 8, caractérisé en ce que les éléments de fixation comprennent une plaque ou une nervure (36) pour assujettir la paroi arrière dans la zone de son arête supérieure, la plaque ou la nervure étant formée comme partie de l'organe de connexion supérieur (18) et étant orientée vers le bas.

10. Cadre latéral selon la revendication 8, caractérisé en ce que les éléments de fixation comprennent des rainures (38, 40) qui sont formées dans les organes de connexion inférieurs (20) et qui sont orientés vers le haut, pour loger et assujettir la paroi arrière dans sa partie d'arête inférieure.

11. Etagère à présentation de marchandises avec un cadre latéral selon l'une des revendications 1 à 10.
